# FASCICULE DE BREVET EUROPEEN

(11) **EP 2 628 643 B1**
(45) Date de publication et mention de la délivrance du brevet: **17.12.2014**
(21) Numéro de dépôt: 13154476.9
(22) Date de dépôt: 07.02.2013
(51) Int. Cl.: B60R 13/08, F01N 13/14

(54) **Ecran de protection acoustique et thermique pour véhicule automobile**
Akustischer und thermischer Schutzschirm für Kraftfahrzeug
Acoustic and thermal protection shield for a motor vehicle

(30) Priorité: 20.02.2012 FR 1251519
(43) Date de publication de la demande: 21.08.2013
(73) Titulaire: CENTRE D'ETUDE ET DE RECHERCHE POUR L'AUTOMOBILE (CERA), 51100 Reims (FR)
(72) Inventeur: Choquart, François, 51100 Reims (FR); Drezet, David, 51400 Prosnes (FR)
(74) Mandataire: Sayettat, Julien Christian

(56) Documents cités:
- EP-A1- 1 475 489
- EP-A1- 1 772 604
- WO-A1-98/56573
- DE-A1-102005 041 707

## Description

L'invention concerne un écran de protection acoustique et thermique pour véhicule automobile et un procédé de réalisation d'un tel écran.

Il est connu, de réaliser, notamment par compression à chaud, un écran comprenant une coque poreuse, notamment en feutre ou en mousse, ladite coque étant revêtue de couches de protection, notamment sous forme de films ou de non tissés.

Un tel écran a une fonction principale acoustique et peut avoir une fonction secondaire de protection thermique de composants secondaires (câbles, conduits,..) ou structurels (tôle de tablier moteur, boîte d'auvent,..).

La fonction de protection thermique peut être liée directement aux propriétés d'isolation thermique intrinsèques de la coque, ou encore par l'ajout en surface de ladite coque d'une couche réfléchissante du rayonnement infrarouge (feuillard aluminium, film aluminisé,...).

Dans le cas de très hautes températures localisées sur une zone de l'écran, on peut être amené à disposer en outre sur la couche réfléchissante au moins un patch localisé de protection thermique, notamment métallique, tels qu'un « AMS » (multicouches, par exemple à base d'aluminium ou d'inox).

Le patch doit bien sûr s'inscrire dans le volume total alloué à l'écran.

Or un patch multicouche a un volume défini qui ne peut être remis en cause (par exemple par écrasements locaux) sans dégradation de ses performances thermiques.

Selon les réalisations connues, le patch est fixé sur la couche réfléchissante en créant une excroissance qui peut être incompatible avec le volume alloué à l'écran.

En outre, la fixation du patch requiert l'emploi de fixations spécifiques (rivets, adhésif,...), ce qui complexifie la fabrication de l'écran et génère des surcoûts.

Par ailleurs, un patch multicouches présente comme particularité que les différentes couches sont associées entre elles de sorte que ledit patch se présente sous la forme d'une pièce d'un seul tenant, aisément manipulable pour pouvoir être fixé.

L'association des différentes couches entre elles se fait notamment par sertissage ou repliement périphérique, ce qui correspond à une opération spécifique de fabrication complexifiant la réalisation de l'écran.

Le document EP 1772604 révèle un écran de protection acoustique selon le préambule de la revendication 1.

L'invention a pour but de pallier ces inconvénients.

A cet effet, et selon un premier aspect, l'invention propose un écran de protection acoustique et thermique pour véhicule automobile selon la revendication 1

Un tel agencement résout les inconvénients rencontrés dans l'art antérieur :
- le patch est intégré dans le volume de la coque, ce qui évite le risque que l'écran ne puisse tenir dans son volume alloué,
- la fixation du patch ne requiert pas l'emploi de fixations spécifiques, ledit patch étant maintenu par la couche de recouvrement,
- le fait que les feuilles soient non liées les unes aux autres constitue une simplification du processus de fabrication de l'écran.

On notera que le maintien en place des feuilles, qui ne sont pas liées les unes aux autres, est assuré du fait que le patch est confiné dans le logement dont la profondeur correspond à l'épaisseur dudit patch, ledit logement étant refermé par la couche métallique réfléchissante.

Selon un deuxième aspect, l'invention propose un procédé de réalisation d'un tel écran selon la revendication 7.

D'autres particularités et avantages de l'invention apparaîtront dans la description qui suit, faite en référence aux figures jointes dans lesquelles :

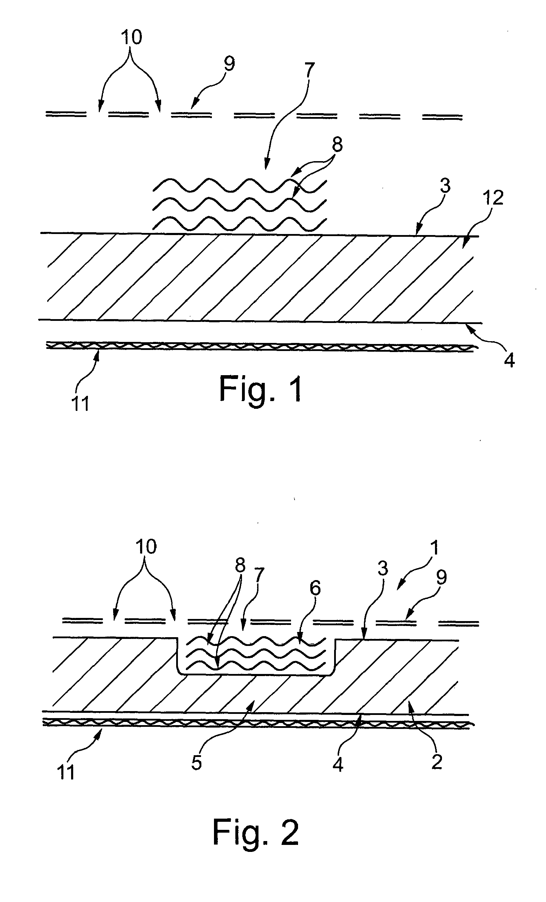

- la figure 1 est une vue schématique en coupe partielle d'un écran en cours de fabrication selon une réalisation, avant l'étape de compression à chaud,
- la figure 2 est analogue à la figure 1, l'écran étant réalisé.

En référence aux figures, on décrit un écran 1 de protection acoustique et thermique pour véhicule automobile, ledit écran comprenant disposés successivement l'un sur l'autre :
- une coque 2 à base de matériau poreux, ladite coque présentant une face interne 3 - destinée à être tournée vers une source de bruit et de chaleur, telle que le moteur dudit véhicule - et une face externe 4, ladite coque comprenant une - voire plusieurs - zone 5 comprimée définissant un logement 6 du côté de ladite face interne,
- un - voire plusieurs - patch 7 de protection thermique comprenant un empilement de feuilles 8 métalliques embossées - de manière à réaliser un écartement limitant aux points de contact entre lesdites feuilles le transfert thermique par conduction -, lesdites feuilles étant non liées les unes aux autres, ledit patch étant disposé dans ledit logement, l'épaisseur dudit patch correspondant à la profondeur dudit logement,
- une couche métallique réfléchissante de recouvrement 9 de ladite face interne, ladite couche adhérant à ladite face de manière à maintenir ledit patch dans ledit logement.

A titre d'exemple, le patch 7 peut comprendre entre trois et cinq feuilles 8 d'aluminium ou d'inox, d'épaisseur comprise entre 10 et 50 microns.

La couche de recouvrement 9 peut être notamment à base d'aluminium ou d'inox, et présenter une épaisseur comprise entre 50 et 150 microns.

Selon une réalisation, la couche de recouvrement 9 est localisée, c'est à dire qu'elle ne recouvre que partiellement la face interne 3, ladite couche débordant selon une bande périphérique autour du logement 6 - ladite bande présentant par exemple une largeur comprise entre 20 et 30 mm -, ladite bande assurant une interface de cohésion entre ladite couche de recouvrement et ladite face.

La couche 9 est ainsi de dimensions limitées, disposée uniquement en zone fortement exposée à la chaleur, ce qui permet d'optimiser le poids et le coût de l'écran 1.

Selon une réalisation, la couche de recouvrement 9 adhère à la feuille métallique 8 qui lui est contigüe, ceci par les sommets des bossages.

Un tel agencement permet d'assurer un bon maintien du patch 7 dans son logement 6, ce qui évite une dégradation due à un frottement dudit patch contre la couche de recouvrement 9 du fait des vibrations du véhicule en roulage.

Selon une réalisation, la couche de recouvrement 9 est pourvue d'une pluralité de perforations 10, de manière à permettre un passage des ondes acoustiques au sein du logement 6 et de la coque 2 en vue de leur absorption.

A titre d'exemple, on peut prévoir de 25 à 60 perforations / cm², leur diamètre étant compris entre 0,12 et 0,25 mm.

Selon une réalisation, la coque 2 est à base de mousse - notamment de polyuréthanne ou de mélamine - ou de feutre pourvu d'une résine thermodurcissable - notamment phénolique ou acrylique.

Selon une réalisation, la face externe 4 est revêtue d'une couche de protection 11 - notamment à base de non tissé ou de film.

On décrit à présent un procédé de réalisation d'un écran 1, ledit procédé comprenant les étapes suivantes :
- prévoir un moule de compression, non représenté, comprenant un poinçon et une matrice,
- disposer sur ladite matrice une couche de matériau poreux 12 apte à être moulé par compression à chaud,
- disposer sur ladite couche au moins un patch 7 comprenant un empilement de feuilles 8 métalliques, lesdites feuilles étant non liées les unes aux autres,
- disposer sur ladite couche poreuse une couche métallique de recouvrement 9 pourvue d'une enduction d'envers à base d'adhésif thermodurcissable, ladite couche de recouvrement recouvrant ledit patch,
- réaliser une compression à chaud de l'ensemble,
- démouler l'écran 1 obtenu.

Selon une réalisation, les feuilles 8 sont temporairement liées entre elles et à la couche métallique de recouvrement 9 par au moins une fixation temporaire en matériau thermoplastique monobloc se présentant sous la forme d'une tige, les extrémités de ladite tige étant pourvues de bâtonnets perpendiculaires à ladite tige et s'étendant de part et d'autre de l'axe de ladite tige, ladite tige traversant lesdites feuilles et ladite couche de recouvrement et lesdits bâtonnets assurant le maintien de ladite tige.

De telles fixations sont bien connues, étant notamment utilisées pour l'étiquetage de vêtements.

Elles sont notamment mises en place à l'aide d'un « pistolet » pourvu d'une aiguille creuse à travers laquelle est projetée la fixation, opération particulièrement simple à effectuer en comparaison d'un sertissage ou repliement périphérique.

Typiquement, on prévoira l'utilisation de deux fixations temporaires.

L'ensemble patch 7 / couche de recouvrement 9 est alors disposé contre la couche poreuse 12 et comprimé à chaud, ce qui a pour effet de réaliser une fusion des fixations temporaires, les feuilles 8 se retrouvant non liées entre elles.

On peut prévoir en outre, avant la compression à chaud, une fixation temporaire de l'ensemble patch 7 / couche de recouvrement 9 sur la couche poreuse 12 par d'autres fixations temporaires du type de celles décrites ci-dessus, ce qui permet de garantir un positionnement fixe du patch 7 sur l'écran 1 lors de la compression.

Dans un tel procédé, le logement 6 est réalisé par compression du patch 7 contre la couche de matériau poreux 12 qui s'écrase localement pour définir le logement 6.

Il peut être prévu un tirage sous vide pour faciliter la conformation de l'écran 1.

Selon une réalisation, le procédé comprend en outre l'étape de recouvrir la matrice d'une couche de protection 11, ladite couche étant pourvue d'une enduction d'adhésif thermodurcissable, avant mise en place de la couche de matériau poreux 12.

On notera que l'adhésif thermodurcissable, disposé sur les couches de recouvrement 9 et/ou de protection 11, est activé du fait que la compression est faite à chaud.

## Revendications

1. Ecran (1) de protection acoustique et thermique pour véhicule automobile, ledit écran comprenant disposés successivement l'un sur l'autre :
• une coque (2) à base de matériau poreux, ladite coque présentant une face interne (3) et une face externe (4), ladite coque comprenant une zone (5) comprimée définissant un logement (6) du côté de ladite face interne,
• un patch (7) de protection thermique, ledit patch étant disposé dans ledit logement,
• une couche métallique réfléchissante de recouvrement (9) de ladite face interne, ladite couche adhérant à ladite face de manière à maintenir ledit patch dans ledit logement, characterisé en se que ledit patch (7) de protection thermique comprend un empilement de feuilles (8) métalliques embossées, lesdites feuilles étant non liées les unes aux autres et que l'épaisseur dudit patch correspond à la profondeur dudit logement.

2. Ecran selon la revendication 1, **caractérisé en ce que** la couche de recouvrement (9) est localisée, ladite couche débordant selon une bande périphérique autour du logement (6), ladite bande assurant une interface de cohésion entre ladite couche de recouvrement et ladite face.

3. Ecran selon la revendication 1 ou 2, **caractérisé en ce que** la couche de recouvrement (9) adhère à la feuille métallique (8) qui lui est contigüe.

4. Ecran l'une quelconque des revendications 1 à 3, **caractérisé en ce que** la couche de recouvrement (9) est pourvue d'une pluralité de perforations (10), de manière à permettre un passage des ondes acoustiques au sein du logement (6) et de la coque (2) en vue de leur absorption.

5. Ecran selon l'une quelconque des revendications 1 à 4, **caractérisé en ce que** la coque (2) est à base de mousse ou de feutre pourvu d'une résine thermodurcissable.

6. Ecran selon l'une quelconque des revendications 1 à 5, **caractérisé en ce que** la face externe (4) est revêtue d'une couche de protection (11).

7. Procédé de réalisation d'un écran selon l'une quelconque des revendications 1 à 6, ledit procédé comprenant les étapes suivantes :
• prévoir un moule de compression comprenant un poinçon et une matrice,
• disposer sur ladite matrice une couche de matériau poreux (12) apte à être moulé par compression à chaud,
• disposer sur ladite couche au moins un patch (7),
• disposer sur ladite couche poreuse une couche métallique de recouvrement (9) pourvue d'une enduction d'envers à base d'adhésif thermodurcissable, ladite couche de recouvrement recouvrant ledit patch,
• réaliser une compression à chaud de l'ensemble,
• démouler l'écran (1) obtenu, characterisée en se que ledit patch (7) comprend un empilement de feuilles (8) métalliques, lesdites feuilles étant non liées les unes aux autres.

8. Procédé selon la revendication 7, **caractérisé en ce qu'**il comprend en outre l'étape de recouvrir la matrice d'une couche de protection (11), ladite couche étant pourvue d'une enduction d'adhésif thermodurcissable, avant mise en place de la couche de matériau poreux (12).

## Patentansprüche

1. Akustischer und thermischer Schutzschirm (1) für Kraftfahrzeug, wobei der Schirm, aufeinander folgend übereinander angeordnet, Folgendes umfasst:
- eine Schale (2) auf der Grundlage von porösem Material, wobei die Schale ein innere Fläche (3) und eine äußere Fläche (4) aufweist, wobei die Schale einen komprimierten Bereich (5) umfasst, der eine Aufnahme (6) auf der Seite der inneren Fläche definiert,
- einen thermischen Schutzflicken (7), wobei der Flicken in der Aufnahme angeordnet ist,
- eine reflektierende metallische Schicht zu Bedeckung (9) der inneren Fläche, wobei die Schicht an der Fläche haftet, um den Flicken in der Aufnahme zu halten, **dadurch gekennzeichnet, dass** der thermische Schutzflicken (7) einen Stapel von geprägten metallischen Tafeln (8) umfasst, wobei die Tafeln nicht miteinander verbunden sind, wobei die Dicke des Flickens der Tiefe der Aufnahme entspricht.

2. Schirm nach Anspruch 1, **dadurch gekennzeichnet, dass** die Abdeckungsschicht (9) genau abgegrenzt ist, wobei die Schicht gemäß einem Randstreifen um die Aufnahme (6) übersteht, wobei das Band eine Kohäsionsschnittstelle zwischen der Abdeckungsschicht und der Fläche sicherstellt.

3. Schirm nach Anspruch 1 oder 2, **dadurch gekennzeichnet, dass**: die Abdeckungsschicht (9) an der Metalltafel (8) haftet, die an sie angrenzt.

4. Schirm nach einem der Ansprüche 1 bis 3, **dadurch gekennzeichnet, dass** die Abdeckungsschicht (9) mit einer Vielzahl von Perforationen (10) versehen ist, um einen Durchgang der akustischen Wellen in die Aufnahme (6) und in die Schale (2) für ihre Absorption zu ermöglichen.

5. Schirm nach einem der Ansprüche 1 bis 4, **dadurch gekennzeichnet, dass** die Schale (2) aus Schaum oder Filz besteht, versehen mit einem wärmehärtbaren Harz.

6. Schirm nach einem der Ansprüche 1 bis 5, **dadurch gekennzeichnet, dass** die äußere Fläche (4) mit einer Schutzschicht (11) beschichtet ist.

7. Verfahren zur Herstellung eines Schirms nach einem der Ansprüche 1 bis 6, wobei das Verfahren die folgenden Schritte umfasst:
- Bereitstellen einer Pressform, die eine Stanze und eine Matrize umfasst,
- Anordnen auf der Matrix von einer Schicht aus porösem Material (12), die ausgelegt ist, um durch Heißpressen geformt zu werden,
- Anordnen von mindestens einem Flicken (7) auf der Schicht,
- Anordnen auf der porösen Schicht von einer metallischen Abdeckschicht (9), die mit einer Rückbeschichtung auf der Grundlage von wärmehärtbarem Klebstoff versehen ist, wobei die Abdeckungsschicht den Flicken abdeckt,
- Durchführen einer Heißpressung der Einheit,
- Entformen des erhaltenen Schirms (1), **dadurch gekennzeichnet, dass** der Flicken (7) einen Stapel von metallischen Tafeln (8) umfasst, wobei die Tafeln nicht miteinander verbunden sind.

8. Verfahren nach Anspruch 7, **dadurch gekennzeichnet, dass** es außerdem den Schritt des Abdeckens der Matrize mit einer Schutzschicht (11) umfasst, wobei die Schicht mit einer Beschichtung aus wärmehärtbarem Klebstoff vor der Anbringung der Schicht aus porösem Material (12) versehen wird.

## Claims

1. Shield (1) for the acoustic and thermal protection for a motor vehicle, said shield comprising arranged successively one on the other:
- a shell (2) with a porous material base, said shell having an internal surface (3) and an external surface (4), said shell comprising a compressed zone (5) defining a housing (6) on the side of said internal surface,
- a thermal protective patch (7), said patch being arranged in said housing,
- a reflective metal covering layer (9) of said internal surface, with said layer adhering to said surface in such a way as to maintain said patch in said housing, **characterised in that** said thermal protective patch (7) comprise a stack of embossed metal sheets (8), said sheets not being linked to one another, and that the thickness of said patch correspond to the depth of said housing.

2. Shield according to claim 1, **characterised in that** the covering layer (9) is localised, said layer extending according to a peripheral strip around the housing (6), said strip providing a cohesion interface between said covering layer and said surface.

3. Shield according to claim 1 or 2, **characterised in that** the covering layer (9) adheres to the metal sheet (8) which is contiguous to it.

4. Shield according to any of claims 1 to 3, **characterised in that** the covering layer (9) is provided with a plurality of perforations (10), in such a way as to allow for the passage of sound waves within the housing (6) and the shell (2) in order to absorb them.

5. Shield according to any of claims 1 to 4, **characterised in that** the shell (2) is made from foam or felt provided with a thermosetting resin.

6. Shield according to any of claims 1 to 5, **characterised in that** the external surface (4) is covered with a protective layer (11).

7. Method for carrying out a shield according to any of claims 1 to 6, said method comprising the following steps:
- providing a compression mould comprising a punch and a die,
- arranging on said die a layer of porous material (12) able to be moulded by hot pressing,
- arranging on said layer at least one patch (7),
- arranging on said porous layer a metal covering layer (9) provided with a back coating with a thermosetting adhesive base, said covering layer covering said patch,
- carrying out a hot pressing of the whole,
- unmoulding the shield (1) obtained, **characterised in that** said thermal protective patch (7) comprise a stack of metal sheets (8), said sheets not being linked to one another.

8. Method according to claim 7, **characterised in that** it further comprises the step of coating the die with a protective layer (11), said layer being provided with a thermosetting back coating, before the setting into place of the layer of porous material (12).
